# EUROPÄISCHE PATENTSCHRIFT

(11) **EP 2 462 023 B1**
(45) Veröffentlichungstag und Bekanntmachung des Hinweises auf die Patenterteilung: **27.05.2015**
(21) Anmeldenummer: 10747159.1
(22) Anmeldetag: 23.07.2010
(51) Int. Cl.: B64F 5/00, H05B 3/36

(54) **VORRICHTUNG ZUR ENTEISUNG VON FAHRZEUGEN, INSBESONDERE FLUGZEUGEN**
DEVICE FOR DEICING AIRPLANES
DISPOSITIF DE DÉGIVRAGE D'AVIONS

(30) Priorität: 03.08.2009 EP 09009976
(43) Veröffentlichungstag der Anmeldung: 13.06.2012
(73) Patentinhaber: König, Olga, 35041 Marburg (DE)
(72) Erfinder: König, Olga, 35041 Marburg (DE)
(74) Vertreter: Jeck, Anton
(86) Internationale Anmeldenummer: PCT/EP2010/004513
(87) Internationale Veröffentlichungsnummer: WO 2011/015291

(56) Entgegenhaltungen:
- DE-A1- 2 229 808
- DE-A1- 19 823 496
- US-A- 3 349 359
- US-A- 5 003 157
- US-A- 5 804 799

## Beschreibung

Die Erfindung betrifft eine Vorrichtung nach dem Oberbegriff des Anspruchs 1.

Die hier beschriebene Erfindung ist in den Bereich der Luftfahrttechnik einzugliedern und stellt ein neuartiges Enteisungssystem für das Enteisen von Luftfahrzeugen (LF) am Boden dar. Eingesetzt werden kann das System auf allen Gebieten des Energiemaschinenbaus.

Die Vereisungen eines Luftfahrzeugs am Boden unterscheiden sich grundsätzlich von dem Vereisungsprozess während des Fluges. Befindet sich das Luftfahrzeug in der Luft, vereist vorwiegend der Bug. Am Boden jedoch vereisen nahezu alle Flächen des Luftfahrzeuges: Bug, Flügel, Leitwerk und der Rumpf. Gefährlich ist insbesondere die Vereisung der Flügel und des Leitwerkes. Es kann bereits bei geringen Anstellwinkeln des Leitwerkes zu Strömungsabrissen kommen. Das vereiste Flugzeug ist beim Starten und im Steigflug instabil und bei der Steuerung treten Störungen auf. Weiterhin verändert das Luftfahrzeug seine Flugcharakteristik. Ein Absturz kann die Folge sein. (Trunow O. K., Flugsicherheit bei Vereisungsbedingungen, Moskau, GNIIGAR, 1995, S. 17).

Zum Enteisen von Flugzeugen vor dem Start am Boden werden weltweit dazu geeignete Enteisungsflüssigkeiten verwendet. Sie entfernen Schnee, Eis sowie Raureif und verzögern die Neubildung.

Die wesentlichen Anforderungen an Enteisungsmittel für Flugzeuge sind nachstehend aufgeführt:
- Hohe Effizienz beim Entfernen von Reif, feste (kristalline) Vereisung und Packeis.
- Die Eigenschaft des Vereisens der Oberflächen der Luftfahrzeuge bei entsprechenden Wetterbedingungen (Schneeschauer, Eisregen...) zu verzögern (Typ I) bzw. für einen definierten Zeitraum gänzlich zu vermeiden (Typ II).
- Die Enteisungsflüssigkeit muss beim Starten (bei einer Geschwindigkeit größer 160 km/h) von der Flugzeugoberfläche rückstandslos abfließen.
- Auch bei niedrigen Außenlufttemperaturen darf die Enteisungsflüssigkeit, zum Minimieren des Energieaufwandes der Besprühungsanlage, nicht zähflüssig werden.
- Die Enteisungsflüssigkeit muss ungiftig sein.
- Von der Enteisungsflüssigkeit darf keine nachhaltige Schädigung der Umwelt ausgehen.

Die Enteisungsflüssigkeiten vom Typ I (meist Newtonsche Flüssigkeiten) stellen keinen längeren Schutz vor einer Wiedervereisung dar. Sie werden unmittelbar vor dem Start eingesetzt. Die Enteisungsflüssigkeiten vom Typ II verhindern dagegen für einen bestimmten Zeitraum das Wiedervereisen. Sie sind stark verdickte Lösungen mit toxotropischen Eigenschaften. Auch sie stellen meist eine Newtonsche Flüssigkeit dar.

Neben den Enteisungsflüssigkeiten kommen auch elektrische Enteisungsanlagen, zum Einsatz. Am verbreitesten sind Systeme mit zyklischen Aufheizphasen (Komissarow G. W., Enteisungssysteme der Luftfahrzeuge, Moskau, 1967).

Im Folgenden sind die wichtigsten bekannten elektrischen Enteisungsanlagen bzw. elektrothermische Heizeinrichtungen sowie elektrisch beheizbare Gegenstände aufgeführt:
a) Durch US 2627012 sind elektrothermische Heizeinrichtungen bekannt, die in aerodynamische Oberflächen von Luftfahrzeugen integriert sind (Patentschrift US Nº 2627012 Informationsverlagszentrum Wissenschaft, Kultur, Kunst (IVZ WKK) 244-134, 1958). Die elektrothermischen Heizeinrichtungen sind an vereisungsgefährdeten Stellen der Flugzeugstruktur angeordnet und können während des Flugs betrieben werden.
b) Durch SU 335159 ist eine elektrothermische Enteisungsanlage bekannt, bestehend aus Heizelementen in Form einer dünnen Beschichtung von Flugzeugoberflächen mit einem elektrisch leitfähigen Material (AC SU Nº 335159 IPK B64D15/12, 09.01.69).
c) Durch RU 234781 ist eine Enteisungsanlage bekannt, im Wesentlichen bestehend aus einer vom zu enteisenden Objekt elektrisch isolierten Elektrode und einer Gleichstromquelle. Dabei muss die Oberfläche des zu enteisenden Objektes entweder ein ferroelektrisches, ein ferromagnetisches oder ein halbleitendes Material sein. Durch elektromagnetische Effekte entsteht Wärme (Patentschrift RU Nº 2234781, IPK H02G07/16, H05B06/00, B64D15/00, vom 30.11.1999).
d) Durch RU 2182406 ist ein elektrothermischer Stoff bzw. ein elektrothermisches Gewebe bekannt, der aus einer Reihe elektrisch isolierender Fäden und mindestens zwei leitenden Schienen hergestellt ist. An die beiden Schienen sind elektrisch leitfähige Fäden angeschlossen. Die isolierenden und leitenden Fäden sind miteinander verwoben, um eine gleichmäßige Wärmeverteilung sicherzustellen (Patentschrift RU Nº 2182406, IPK H05B03/36 vom 10.05.2002).
e) Zum Schutz elektronischer Ausrüstungsgegenstände, insbesondere von Globalstar Satellitentelefonen, vor widrigen Umgebungstemperaturen ist durch RU 2246188 eine Wärmeschutztasche aus einer Sandwichstruktur bekannt. Ein Heizelement der Wärmeschutztasche besteht aus einem flexiblen elektrisch beheizbaren Gewebe mit beidseitig angeordneten elektrischen Abschirmungen. Die Wärmeschutztasche nimmt den gesamten zu schützenden Gegenstand auf (Patentschrift RU Nº 2246188 IPK H05K07/20, vom 28.12.2001). Eine elektrothermische Enteisungsanlage, die nach dem Prinzip einer solchen Wärmeschutztasche aufgebaut wäre, würde die gesamten Tragflächen umhüllen bzw. aufnehmen.
f) Durch die US 5 804 799 ist eine Vorrichtung gemäß dem Oberbegriff des Anspruchs 1 bekannt, bei der wie auch bei den Vorrichtungen der US 6 696 674 B1, DE 22 29 808 A1 , DE 196 42 037 A1 und US 5 637 247 A Heizdrähte als Heizelemente verwendet werden.

Bei der Verwendung von Enteisungsflüssigkeiten zum Enteisen insbesondere der Flügel und der Leitwerke von Luftfahrzeugen findet zwangsweise eine Störung des ökologischen Systems statt. Die Flüssigkeiten werden in großen Mengen in die Umwelt eingetragen.

Die Wiederverwendung der Enteisungsflüssigkeiten ist nicht möglich, sie zerstäuben beim Abfließen von den Flugzeugflügeln. Ein kontinuierliches Nachkaufen der Flüssigkeit in großen Mengen ist erforderlich. Dies bedingt einen hohen logistischen Aufwand der entsprechend finanziert werden muss.

Die beschriebenen elektrischen Enteisungssysteme für Luftfahrzeuge bzw. elektrothermische Heizeinrichtungen sowie elektrisch beheizbare Gegenstände verbrauchen viel Energie (a, e), erfordern zusätzlich aufzubringende Metallbeschichtungen (b), oder können nur bei Vorhandensein bestimmter Materialien verwendet werden (b, c). Sie sind nicht selbstregulierend (a bis e) oder umschließen den gesamten Flügel und verhindern damit einen ungestörten Ablauf des Tauwassers (e). Auch sind sie nicht ohne weiteres für alle Flugzeuggrößen geeignet (e). Außerdem ist eine vollständige Umhüllung des Flugzeugflügels (e) nicht erforderlich. Auf der Unterseite bleibt Schnee nicht liegen und Eis entsteht ebenfalls nicht. Die unter f) dargelegten, elektrischen Enteisungssysteme verwenden Heizelemente aus Metalldrähten, deren Flexibilität begrenzt ist und die zu Brüchen neigen, so dass die Lebensdauer der Heizmatten sehr begrenzt ist.

Zusammengefasst ist die Verwendung von Enteisungsflüssigkeiten aufwändig und stört das ökologische System. Bestehende elektrische Enteisungssysteme für Luftfahrzeuge sind ineffizient und/oder erfordern hohe technische Anforderungen an die zu enteisenden Objekte.

Durch US 5,804,799 ist eine Heizdecke zur Abdeckung eines Automobils bekannt. Die Heizdecke besteht aus einer äußeren Schicht aus Nylon und einer inneren Schicht aus Plastik oder anderem geeignetem wasserdichtem Material. Die äußere Nylonschicht schützt das Äußere des Automobils. Die innere Plastikschicht schützt die in ihr untergebrachten Heizelemente. Die Heizdecke umfasst eine Vielzahl von in der inneren Plastikschicht untergebrachten, miteinander verbundenen Heizspulen.

Durch US 5,003,157 ist eine Heizmatte zur Freihaltung eines Fußwegs eines Wohnhauses von Schnee bekannt. Mehrere Heizmatten werden der Länge nach entlang eines Fußwegs diesen überdeckend auf den Boden gelegt, um ein effektives Schmelzen und Ablaufen von auf einer oberen Oberfläche der Heizmatte angesammelten Schnees zu ermöglichen. Die Heizmatte weist eine elastische Rippenkonstruktion auf, umfassend eine Reihe von dorthindurch gerichteten elektrischen Widerstandsheizelementen. Um das Schmelzen und Ablaufen von oben auf der Heizmatte angesammelten Schnees zu ermöglichen, weist die obere Oberfläche von einem zentralen Rücken zur Seite hin abfallende Seitenpartien auf, um Flüssigkeit von der Oberseite der Heizmatte nach unten zu leiten. Im Inneren der Heizmatte können Längskanäle vorgesehen sein, um die Widerstandsheizelemente vor den Belastungen zu polstern, die durch das Begehen des vermittels der Heizmatte von Schnee freigehaltenen Fußwegs entstehen. Die Unterseite der Heizmatte ist eben ausgeführt, um den Kontakt zum darunter befindlichen Pfad zu verbessern. Zur Drainage von Flüssigkeit unter der Heizmatte ist die Unterseite mit parallelen Rippen und dazwischen liegenden Kanälen versehen.

Durch DE 2 229 808 A ist eine Widerstandsheizmatte zur Enteisung von Flugzeugen bekannt. Das mit eingewebten Heizfäden versehene Trägergewebe kann beidseitig mit Kunststoff beschichtet sein. In einer oder in beiden Kunststoffschichten können wärmeleitende Zusatzstoffe eingebettet sein, beispielsweise für den Fall, dass auf der einen Seite der Heizmatte eine Wärmeisolation, dagegen auf der anderen Seite eine besonders gute Wärmeableitung erzielt werden soll.

Durch US 3,349,359 ist eine Heizmatte mit karbonisierten oder graphitierten Fasern als Heizfäden bekannt. Damit diese nicht zerstört werden, sind die Heizfäden mit Glasfasern verwoben.

Durch DE 198 23 496 A1 ist eine Heizmatte bekannt, die an der Oberfläche des Widerstandsheizelements eine Isolationsschicht oder eine Reflexionsschicht aufweist.

Es ist Aufgabe der Erfindung, eine Vorrichtung zur Enteisung von Flugzeugen zur Anwendung am Boden zu schaffen, die keine Enteisungsflüssigkeit erfordert und am Boden eingesetzt werden kann, um das Flugzeug zumindest an allen vereisungsgefährdeten Flächen zu enteisen, und deren Lebensdauer wesentlich erhöht werden kann.

Die gestellte Aufgabe wird mit den Merkmalen des Anspruchs 1 gelöst. Man erkennt, dass die Erfindung jedenfalls dann verwirklicht ist, wenn es sich um eine Enteisungsvorrichtung in Form einer Matte handelt, die insbesondere für Flugzeuge geeignet und so beschaffen ist, dass die Enteisung der vorgesehenen Objekte schnell und mit minimalem Energieaufwand möglich ist. Dabei sind auf der Arbeitsseite der Matte Kanäle ausgebildet, die das während der Enteisung entstehende Wasser schnellstens abführen. Diese in Form von Nuten ausgebildeten Kanäle erstrecken sich z. B. quer zur Längsachse eines Flugzeugflügels, wodurch das Tauwasser schnell abfließen kann.

Gemäß der Erfindung besteht die Wärmereflexionsschicht aus einem silberfarbenen Silikongewebe. Dadurch wird die Wärmestrahlung der Heizelemente zur abzutauenden Fläche reflektiert.

Die Möglichkeit einer Serienanfertigung, bedingt durch den unkomplizierten Systemaufbau der Thermomatten und der optimalen Materialauswahl, bringt einen deutlichen Kostenvorteil gegenüber den bisher bekannten elektrischen Enteisungsanlagen. Die derart gestaltete, flexible Thermomatte weist eine hohe Flexibilität, die zu einer hohen Lebensdauer führt, und eine hohe Festigkeit auf. Im Betrieb übertragen die Heizelemente die Wärme in Form von Wärmestrahlung und Wärmeleitung mit einer hohen Energiedichte an die Oberfläche des abzutauenden Objekts. Die Stromversorgung wird über ein Kabel bzw. über eine Stromleitung sichergestellt.

Das Steuerungssystem regelt mit Hilfe von Temperaturfühlern an der Unterseite (Temperatur der Abtaufläche) und im Inneren der Matten (Heiztemperatur) sowie einem Umgebungslufttemperatursensor eigenständig die Abtauleistung und sorgt für eine energieeffiziente (energieminimierte) Abtauung der mit Eis und Schnee überzogenen Flügel und Leitwerke. Nach dem Abtauprozess bilden die Thermomatten für eine beliebige Zeitspanne bei Schneeschauer oder Eisregen einen zuverlässigen Schutz vor dem Wiedervereisen. Die einzelnen Thermomatten werden unabhängig voneinander leistungsgeregelt. Jede Thermomatte wird also nur so stark beheizt, wie es eine darunter liegende Eisschicht erfordert. Durch diese Vorgehensweise werden 10 bis 15 Prozent Energie eingespart.

Die Thermomatten bilden eine Palette aus sieben unterschiedlichen Größen (und Leistung). Für jeden Flugzeugtyp kann ein speziell computeroptimiertes Set zusammengestellt werden. Dieses Set kann auf rollbaren Transportwagen verstaut und schnell und unkompliziert zu den Flugzeugen befördert werden. Befestigt werden können die Thermomatten an der Oberfläche der Flugzeugflügel und der Leitwerke mit Befestigungsmitteln, wie etwa Bändern in Kombination mit Schnellverschlussklemmen (z. B. dem standardisierten Fast-Typ).

Die neue Flugzeugenteisungsvorrichtung zeichnet sich durch eine höhere Effizienz der Flugzeugenteisung aus. Die Handhabung ist einfach und energieoptimiert. Fehler werden vermieden, indem an einem Monitor des Steuerungssystems die jeweiligen Arbeitsschritte angezeigt werden. Sind alle Thermomatten angeschlossen, wird der Abtauprozess vollautomatisch durchgeführt.

Gemäß einer weiteren Ausbildung der Erfindung beträgt der Abstand der Kohlefäden 2-6 mm.

Gemäß einer weiteren Ausbildung der Erfindung besteht der elektrische Isolator aus einer Schicht aus Glasfasergewebe.

Eine weitere Ausbildung der Erfindung sieht vor, dass die Unterseite der Schicht des elektrischen Isolators derart strukturiert ist, dass Hohlräume zwischen Thermomatte und der abzutauenden Fläche für den Wasserabfluss entstehen. Daher kann das Tauwasser besonders schnell abfließen.

Gemäß weiteren Ausbildungen der Erfindung kann die Unterseitenstruktur durch parallele Stege der Isolationsschicht, die quer zur Flugzeugflügel-Längsrichtung verlaufen, oder durch Noppen der Isolationsschicht gebildet sein. Dadurch werden Kanäle zum schnellen Abfließen des Tauwassers gebildet. Um ein Verrutschen der Thermomatte zu verhindern, können dabei die Unterseiten der Stege bzw. der Noppen mit Silikon gummiert sein.

Gemäß einer weiteren Ausbildung der Erfindung ist im elektrischen Isolator ein die Heiztemperatur messender, drahtlos arbeitender Temperatursensor angeordnet. Mit Hilfe dieses Temperatursensors kann die Leistung der Thermomatte geregelt werden.

Gemäß einer weiteren Ausbildung der Erfindung sind die flexiblen Thermomatten einzeln abhängig von der Stärke des Flugzeugteilblechs leistungsgeregelt.

Gemäß einer weiteren Ausbildung der Erfindung beträgt die Stärke der Thermomatte 5-12 mm, vorzugsweise 10 mm.

Die Möglichkeit einer Serienanfertigung, bedingt durch den unkomplizierten Systemaufbau der Thermomatten und der optimalen Materialauswahl, bringt einen deutlichen Kostenvorteil gegenüber den bisher bekannten elektrischen Enteisungsanlagen. Bei der Anwendung der neuen Flugzeugenteisungsvorrichtung entstehen keine umweltschädlichen Rückstände, wie bei der Verwendung von Enteisungsflüssigkeiten.

Die neue Flugzeugenteisungsanlage kann weltweit an jedem Flugzeug eingesetzt werden. An das Flugzeug bzw. an die Flugzeughülle werden keine besonderen Ansprüche gestellt.

Ein Ausführungsbeispiel der Erfindung wird anhand der Zeichnungen näher erläutert. Es zeigen:

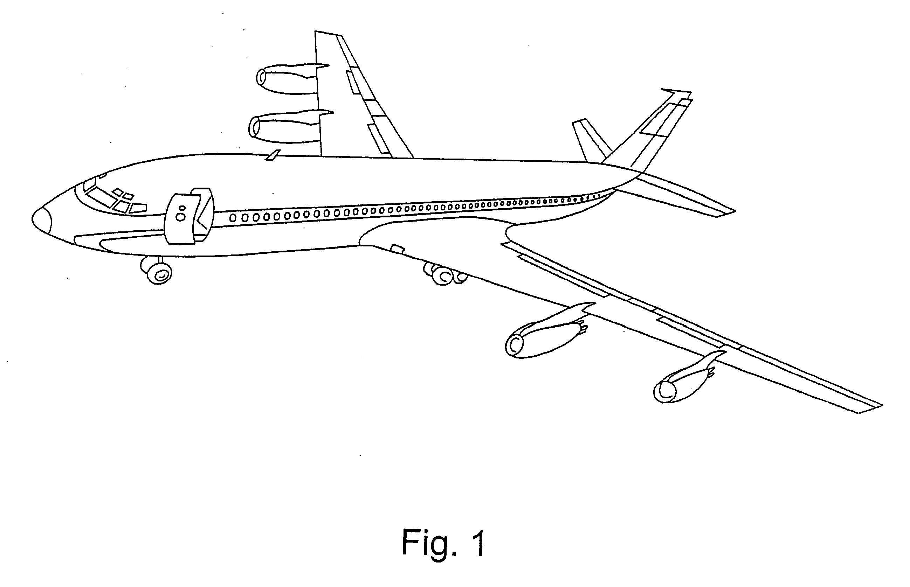

- Fig. 1: ein Passagierflugzeug,
- Fig. 2: einen optimalen Belegungsplan am Beispiel eines Passagierflugzeuges,

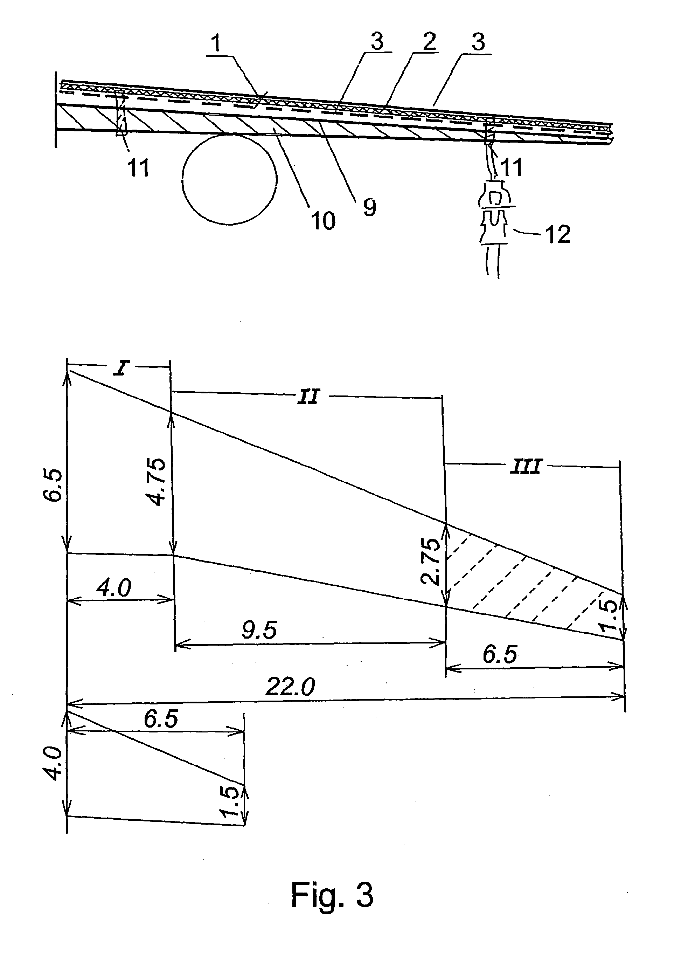

- Fig. 3: eine Thermomatte und die Flächenbestimmung für den Belegungsplan,
- Fig. 4: ein Block-Schaltbild der Automatisierungssteuerung und
- Fig. 5: einen Querschnitt durch eine Thermomatte gemäß der Erfindung.

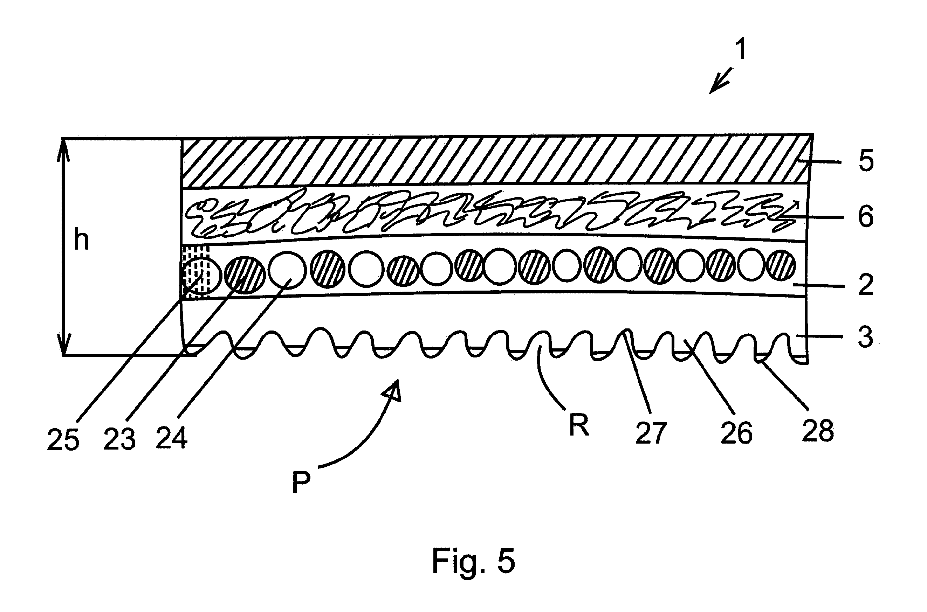

In den Figuren sind dargestellt:
Eine Flugzeugenteisungsvorrichtung zur Anwendung am Boden, die aus mehreren, flexiblen Thermomatten 1 besteht. Die Thermomatten 1 sind an einer Gleich- oder Wechselstromquelle 4 mit einem monitorüberwachtem Steuerungssystem 21 angeschlossen. Eine Thermomatte 1 weist ein flexibles Heizelement 2 aus einem flexiblen elektrothermischen Stoff bzw. aus einem flexiblen elektrothermischen Gewebe, einen elektrischen Isolator 3, eine wasserabweisende Wärmedämmung 6 sowie eine Reflexionsschicht 5 auf. Ein genauerer Aufbau der Thermomatte ist in Fig. 5 angegeben. Es können Leistungssektionen 7 des flexiblen Heizelementes 2 vorgesehen sein, die Heizzonen 8 der Thermomatte 1 bilden. Die Thermomatten 1 können mittels Befestigungsmitteln, beispielsweise mittels Bandbefestigungen 11 bzw. Befestigungen entsprechend dem Fast-Typ 12, an beispielsweise horizontalen Oberflächen des Flugzeugs 9 und/oder am Leitwerk 10 des Flugzeugs 9 befestigt werden. Um ein Abtauen der zu enteisenden Flächen unter eigenständiger Regelung einer Abtauleistung der Thermomatten 1 zu ermöglichen, kann die Flugzeugenteisungsanlage einen Elektroanalyse- und Kontrollblock 13, einen Indikationsblock 14, einen Steuerungsblock 15, einen Kommutationsblock 16, einen Temperatursensor zum Feststellen der Heiztemperatur, einen Temperatursensor 18 zum Feststellen der Temperatur der Abtaufläche, sowie einen Außenlufttemperatursensor 19 umfassen. Stromleitungen 20 dienen der Verbindung mit der Gleich- oder Wechselstromquelle 4. Die Flugzeugenteisungsanlage kann einen im Zentrum für Flugsteuerung angeordneten Bildschirm der Flugbereitschaft 22 aufweisen.

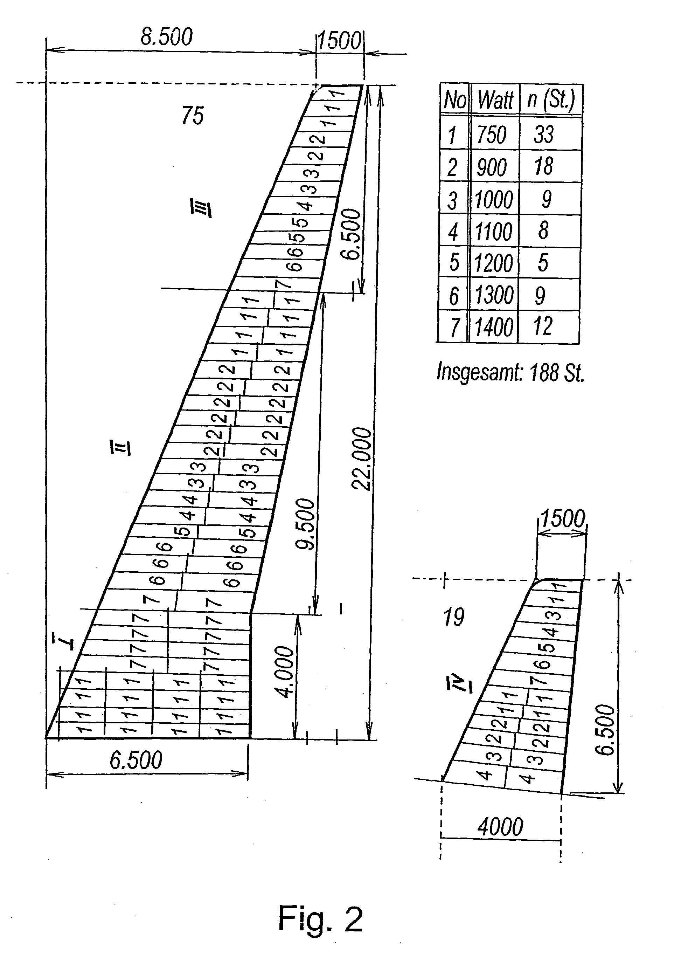

Wie anhand der Fig. 2 gezeigt ist, können mit sieben unterschiedlichen Thermomatten 1 die Oberflächen der Flügel und die Seitenflächen des Leitwerks eines Luftfahrzeugs belegt werden.

Die Thermomatten haben verschieden große Abmessungen und Heizelemente mit verschiedenen Heizleistungen, wie der Tabelle in Fig. 2 zu entnehmen ist. Dabei steigt die Heizleistung von 750 W über 500 W, 1000 W, 1100 W, 1200 W und 1300 W auf 1400 W an.

Wie der Belegungsplan für die Oberfläche eines Flügels zeigt, werden dafür 75 Thermomatten benötigt, die sich zusammen mit den neunzehn Thermoelementen für eine Seitenfläche des Leitwerks zu vierundneunzig Thermoelementen ergänzen. Da beide Flügel und beide Seiten des Leitwerks mit Thermomatten belegt werden, erhöht sich die Anzahl der benötigten Thermomatten auf 188 Stück, die sich wie folgt zusammensetzen:

| | | |
|---|---|---|
| 28 X 33 Thermomatte Nr. 1 mit 750 W | = | 66 Thermomatten |
| 22 x 18 Thermomatte Nr. 2 mit 900 W | = | 36 Thermomatten |
| 2 x 9 Thermomatte Nr. 3 mit 1000 W | = | 18 Thermomatten |
| 2 x 8 Thermomatte Nr. 4 mit 1100 W | = | 16 Thermomatten |
| 2 x 5 Thermomatte Nr. 5 mit 1200 W | = | 10 Thermomatten |
| 2 x 9 Thermomatte Nr. 6 mit 1300 W | = | 18 Thermomatten |
| 2 x 17 Thermomatte Nr. 7 mit 1400 W | = | 24 Thermomatten |
| | = | 188 Thermomatten |

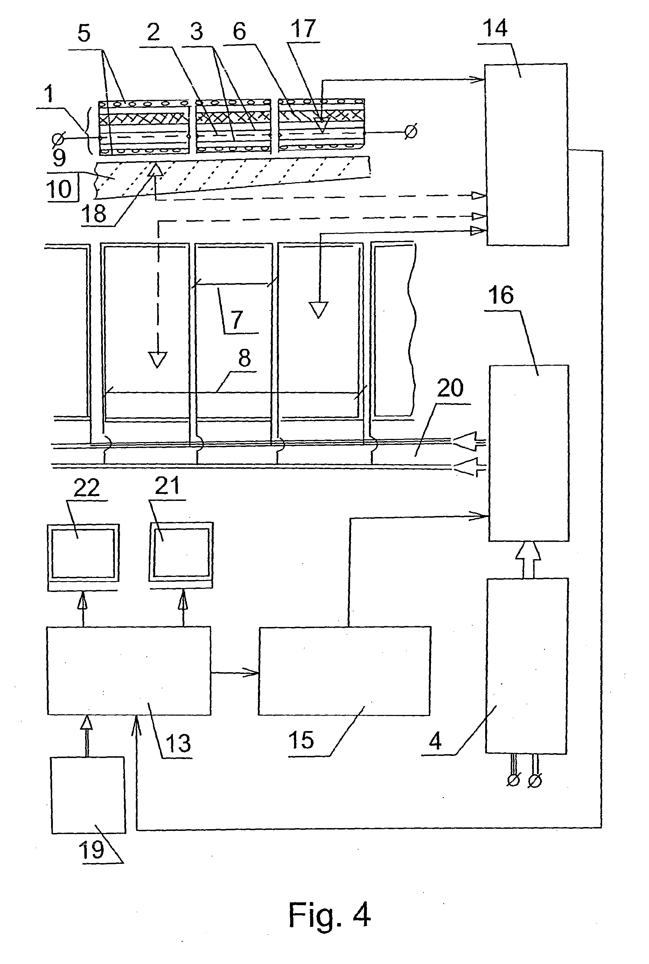

Aus der Fig. 2 sind auch die Maße der Thermomatten Nr. 1 bis Nr. 7 aus den Abmessungen der Flügeloberfläche und der Seitenfläche des Leitwerks zu entnehmen, die dann in den Bereichen I, II, III für die Oberfläche eines Flügels und des Leitwerks ableitbar sind. Schließlich zeigt die Fig. 4 ein Blockschaltbild der Automatisierungssteuerung. Daraus ist zu ersehen, dass ein Indikationsblock 14 über einen Temperatursensor 17 die Temperatur der Heizelemente 2 überwacht und über einen Temperatursensor 18 die Temperatur der Abtaufläche anzeigt. Der Indikationsblock 14 steuert einen Kontrollblock 13 an, dem über einen Außentemperatursensor 19 die Außentemperatur als Wert zuführbar ist. Der Kontrollblock 13 ist mit dem Steuerungsblock 15 verbunden, der den Kommunikationsblock 16 steuert. Zudem steht der Kontrollblock 13 mit einem monitorgesteuerten Steuerungssystem 21 und dem Bildschirm einer Flugbereitschaft 22 in Verbindung. Auf diese Weise ist die Flugzeugenteisungsanlage voll automatisiert und kontrollierbar steuerbar.

In Fig. 5 ist der Aufbau einer Thermomatte genauer dargestellt. Das flexible Heizelement 2 besteht aus einer Schicht, in der Kohlefäden 23 mit einem Abstand von 2-6 mm parallel angeordnet sind. Die Kohlefäden haben eine Fadenfeinheit von 35-300 tex. Zwischen diesen Kohlefäden liegen jeweils gleichgerichtete, flexible Glasfasern 24, die entweder parallel zu den Kohlefäden 23 liegen oder mit diesen verzwirnt sind. Die Kohlefäden weisen eine Fadenfeinheit von 35-300 tex auf. Die Kohlefäden sind über einen stromleitenden Metallfaden 25 an die Stromquelle 4 angeschlossen. Die Leistungsregelung der einzelnen Thermomatten erfolgt in Abhängigkeit von der Blechstärke des abzutauenden Flugzeugteils.

Über dem Heizelement 2 ist eine Wärmedämmung 6 in Form einer Schicht aus Schaumstoff oder Vlies angeordnet. Eine über der Wärmedämmung 6 liegende Reflexionsschicht 5 besteht aus silberfarbenem Silikon. Diese Schicht reflektiert die Wärmestrahlung des Heizelements 2 zur abzutauenden Fläche.

Unter dem Heizelement 2 ist ein elektrischer Isolator 3 in Form einer Isolationsschicht angeordnet, die aus Glasfasergewebe mit einer Faserfeinheit von 30-300 tex besteht. Der elektrische Isolator 3 ist auf seiner Unterseite mit einer Struktur 26 versehen, durch die Hohlräume 27 gebildet sind. Die Unterseitenstruktur 26 kann durch parallele Stege der Isolationsschicht gebildet sein, die quer zur Flugzeugflügel-Längsrichtung verlaufen, oder durch Noppen der Isolationsschicht gebildet sein. Die Höhe der Stege bzw. der Noppen beträgt 1-2 mm. Dadurch kann das Tauwasser sehr schnell abfließen. Die Unterseiten der Stege bzw. der Noppen sind mit Silikon gummiert, um ein Verrutschen der Thermomatte zu verhindern. Im elektrischen Isolator 3 ist ein die Heiztemperatur messender, drahtlos arbeitender Temperatursensor 17 angeordnet. Mit Hilfe solcher Temperatursensoren sind die flexiblen Thermomatten 1 einzeln abhängig von der Stärke des Flugzeugteilblechs leistungsgeregelt.

Die Stärke h der Thermomatte beträgt 5-12 mm, vorzugsweise 10 mm.

## Patentansprüche

1. Vorrichtung zur Enteisung von Fahrzeugen (9), insbesondere Flugzeugen, mit an eine Stromquelle (4) anschließbaren, flexiblen, elektrischen Heizelementen (2) mit einem Steuerungssystem (21), wobei die Heizefemente (2) in flexibler Matte (1) angeordnet sind, die mit abzutauenden Flächen eines zu enteisenden Fahrzeugs (9) in betriebsgemäßen Kontakt bringbar sind, wobei:
- die dem Fahrzeug (9) zugewandte Partie (P) der Matte (1) wasserabführende Räume (R) aufweist,
- die Matte (1) über der Heizelementenschicht eine Wärmedämmschicht (6) aufweist,
- über der Schicht zur Wärmedämmung (6) eine flexible, wasserabweisende Wärmereflexionsschicht (5) sowie unter der Schicht der Heizelemente (2) ein Isolator (3) aus einer flexiblen, wasserabweisenden, elektrischen Isolationsschicht angeordnet ist und
- die Wärmereflexionsschicht (5) aus einem silberfarbenen Silikongewebe besteht.

2. Vorrichtung nach Anspruch 1,
**dadurch gekennzeichnet,**
**dass** die Schicht der Heizelemente (2) aus im Abstand voneinander, parallel angeordneten Kohlefäden (23) und im Abstand voneinander, jeweils zwischen den Kohlefäden und gleichgerichtet angeordneten Glasfasern (24) besteht.

3. Vorrichtung nach Anspruch 2,
**dadurch gekennzeichnet,**
**dass** der Abstand der Kohlefäden (23) 2-6 mm beträgt.

4. Vorrichtung nach einem der Ansprüche 1 bis 3,
**dadurch gekennzeichnet,**
**dass** der elektrische Isolator (3) aus einer Schicht aus Glasfasergewebe besteht.

5. Vorrichtung nach einem der Ansprüche 1 bis 4,
**dadurch gekennzeichnet,**
**dass** die Unterseite der Schicht des elektrischen Isolators (3) derart strukturiert ist, dass Hohlräume (27) zwischen Thermomatte und der abzutauenden Fläche für den Wasserabfluss entstehen.

6. Vorrichtung nach einem der Ansprüche 1 bis 5,
**dadurch gekennzeichnet,**
**dass** die Unterseitenstruktur durch Noppen der Isolationsschicht gebildet ist.

7. Vorrichtung nach Anspruch 6,
**dadurch gekennzeichnet,**
**dass** die Unterseiten der Stege bzw. der Noppen mit Silikon gummiert sind.

8. Vorrichtung nach einem der Ansprüche 1 bis 7,
**dadurch gekennzeichnet,**
**dass** im elektrischen Isolator (3) ein die Heiztemperatur messender, drahtlos arbeitender Temperatursensor (17) angeordnet ist.

9. Vorrichtung nach einem der Ansprüche 1 bis 8,
**dadurch gekennzeichnet,**
**dass** die Stärke der Thermomatte 5-12 mm, vorzugsweise 10 mm, beträgt.

10. Vorrichtung nach einem der Ansprüche 1 bis 9,
**dadurch gekennzeichnet,**
**dass** die flexiblen Thermomatten (1) einzeln leistungsgeregelt sind.

## Claims

1. Device for de-icing vehicles (9), in particular aircraft, with flexible electrical heating elements (2) which can be connected to an electricity source (4) and which have a control system (21), wherein the heating elements (2) are arranged in a flexible mat (1) which can be brought into operative contact with surfaces to be thawed of a vehicle (9) which is to be de-iced, wherein:
- that part (P) of the mat (1) oriented towards the vehicle (9) has waterremoving spaces (R),
- the mat (1) has, over the heating element layer, a thermal barrier layer (6),
- over the thermal barrier layer (6), a flexible, water-repellent heat-reflecting layer (5) and, beneath the layer of heating elements (2), there is arranged an insulator (3) consisting of a flexible, water-repellent electrical insulation layer, and
- the heat-reflecting layer (5) consists of a silver-coloured silicone fabric.

2. Device according to Claim 1,
**characterized in that**
the layer of heating elements (2) consists of carbon filaments (23) arranged mutually parallel and at a distance from one another, and of glass fibres (24) arranged at a distance from one another, in each case between the carbon filaments and with the same orientation.

3. Device according to Claim 2,
**characterized in that**
the separation between the carbon filaments (23) is 2-6 mm.

4. Device according to one of Claims 1 to 3,
**characterized in that**
the electrical insulator (3) consists of a layer of glass fibre fabric.

5. Device according to one of Claims 1 to 4,
**characterized in that**
the underside of the layer of the electrical insulator (3) is structured such that cavities (27) for water egress are produced between the thermal mat and the surface to be thawed.

6. Device according to one of Claims 1 to 5,
**characterized in that**
the underside structure is formed by burls of the insulation layer.

7. Device according to Claim 6,
**characterized in that**
the undersides of the ridges or of the burls are rubberized with silicone.

8. Device according to one of Claims 1 to 7,
**characterized in that**
a wireless temperature sensor (17), which measures the heating temperature, is arranged in the electrical insulator (3).

9. Device according to one of Claims 1 to 8,
**characterized in that**
the thickness of the thermal mat is 5-12 mm, preferably 10 mm.

10. Device according to one of Claims 1 to 9,
**characterized in that**
the power of the flexible thermal mats (1) is controlled individually.

## Revendications

1. Dispositif de dégivrage de véhicules (9), en particulier d'avions, avec des éléments chauffants électriques (2), flexibles, pouvant se raccorder à une source de courant (4), muni d'un système de commande (21), dans lequel les éléments chauffants (2) sont disposés en une nappe flexible (1), qui peut être mise en contact selon le fonctionnement avec des surfaces à dégeler d'un véhicule à dégivrer (9), dans lequel
- la partie (P) de la nappe (1) tournée vers le véhicule (9) présente des espaces d'évacuation de l'eau (R),
- la nappe (1) présente au-dessus de la couche d'éléments chauffants une couche d'isolation thermique (6),
- une couche thermo-réfléchissante flexible hydrofuge (5) est disposée au-dessus de la couche d'isolation thermique (6) et un isolant (3) constitué d'une couche d'isolation électrique, hydrofuge flexible est disposée en dessous de la couche des éléments chauffants (2), et
- la couche thermo-réfléchissante (5) est constituée d'un tissu de silicone argenté.

2. Dispositif selon la revendication 1, **caractérisé en ce que** la couche des éléments chauffants (2) se compose de fils de carbone (23) disposés parallèlement à distance les uns des autres et de fibres de verre (24) disposées à distance les unes des autres, respectivement entre les fils de carbone et avec la même orientation.

3. Dispositif selon la revendication 2, **caractérisé en ce que** la distance entre les fils de carbone (23) vaut 2-6 mm.

4. Dispositif selon l'une quelconque des revendications 1 à 3, **caractérisé en ce que** l'isolant électrique (3) se compose d'une couche en tissu de fibres de verre.

5. Dispositif selon l'une quelconque des revendications 1 à 4, **caractérisé en ce que** la face inférieure de la couche de l'isolant électrique (3) est structurée de telle manière qu'il se forme des cavités (27) entre la nappe thermique et la surface à dégeler pour l'évacuation de l'eau.

6. Dispositif selon l'une quelconque des revendications 1 à 5, **caractérisé en ce que** la structure de la face inférieure est formée par des boutons de fibres de la couche d'isolation.

7. Dispositif selon la revendication 6, **caractérisé en ce que** les faces intérieures des nervures ou des boutons de fibres sont caoutchoutées avec de la silicone.

8. Dispositif selon l'une quelconque des revendications 1 à 7, **caractérisé en ce qu'**un capteur de température (17) opérant sans fil, mesurant la température de chauffage, est disposé dans l'isolant électrique (3).

9. Dispositif selon l'une quelconque des revendications 1 à 8, **caractérisé en ce que** l'épaisseur de la nappe thermique vaut 5-12 mm, de préférence 10 mm.

10. Dispositif selon l'une quelconque des revendications 1 à 9, **caractérisé en ce que** les nappes thermiques flexibles (1) sont individuellement régulées en puissance.
